# FASCICULE DE BREVET EUROPEEN

(11) **EP 3 155 388 B1**
(45) Date de publication et mention de la délivrance du brevet: **04.04.2018**
(21) Numéro de dépôt: 15726217.1
(22) Date de dépôt: 09.06.2015
(51) Int. Cl.: G01K 11/26

(54) **CAPTEUR DE TEMPÉRATURE, UNITÉ ÉLECTRONIQUE INTERAGISSANT AVEC UN TEL CAPTEUR, PROCÉDÉ ET PROGRAMME D'ORDINATEUR ASSOCIÉS**
TEMPERATURSENSOR, MIT SOLCH EINEM SENSOR INTERAGIERENDE ELEKTRONISCHE EINHEIT UND ZUGEHÖRIGES VERFAHREN UND COMPUTERPROGRAMM
TEMPERATURE SENSOR, ELECTRONIC UNIT INTERACTING WITH SUCH A SENSOR, AND RELATED METHOD AND COMPUTER PROGRAM

(30) Priorité: 10.06.2014 FR 1455242
(43) Date de publication de la demande: 19.04.2017
(73) Titulaire: Commissariat à l'Énergie Atomique et aux Énergies Alternatives, 75015 Paris (FR)
(72) Inventeur: NIKOLOVSKI, Jean-Pierre, F-13620 Carry Le Rouet (FR)
(74) Mandataire: Brevalex
(86) Numéro de dépôt international: PCT/EP2015/062851
(87) Numéro de publication internationale: WO 2015/189217

(56) Documents cités:
- EP-A1- 1 591 764
- WO-A1-2014/041306
- DE-A1-102011 056 533

## Description

### DOMAINE TECHNIQUE

Le domaine de l'invention est celui des capteurs de température. L'invention concerne plus particulièrement un capteur de température permettant de réaliser une mesure basée sur la variation, en fonction de la température, des propriétés élastiques et donc de la vitesse des ondes acoustiques se propageant dans une structure résonnante sous la forme d'ondes de Lamb.

### ÉTAT DE LA TECHNIQUE ANTÉRIEURE

Une méthode de mesure de température connue consiste à exploiter l'influence de la température sur les caractéristiques spectrales d'ondes acoustiques se propageant dans une plaque mince.

On connaît en particulier de la demande de brevet WO 2014/041306 A1 un système de détection et de localisation d'un toucher sur une surface tactile d'un objet de type tablette interactive relié à un micro-ordinateur. Les caractéristiques spectrales du signal utilisé pour réaliser cette détection et localisation étant très sensibles à la température, cette demande de brevet propose d'équiper le système d'un module de mesure de la température de l'objet pour venir ensuite corriger le signal utilisé pour la détection/localisation. Le module de mesure de la température exploite l'effet des variations de température sur le décalage des fréquences, en particulier sur le décalage d'au moins une fréquence de résonance de l'objet. Ce module comporte un microcontrôleur d'émission/réception d'ondes acoustiques, éventuellement piloté par le micro-ordinateur.

Si la mesure de température s'avère précise et à temps de réponse court, la solution décrite dans cette demande de brevet n'apparaît pas satisfaisante pour répondre à un besoin pour un capteur de température compact, peu coûteux en terme de consommation électrique et d'un prix de revient particulièrement faible (typiquement inférieur à un euro).

### EXPOSÉ DE L'INVENTION

L'invention a pour objectif de répondre à ce besoin et propose pour ce faire un capteur de température comprenant :
- une structure résonnante destinée à être mise en vibration pour résonner à une fréquence de résonnance qui varie en fonction de la température de la structure résonnante ;
- au moins un émetteur d'ondes acoustiques monté sur la structure résonnante et apte à lui transmettre des ondes acoustiques pour la faire vibrer à ladite fréquence de résonance ;
- un récepteur d'ondes acoustiques monté sur la structure résonnante apte à capter des ondes acoustiques se propageant dans la structure suspendue ;
- des éléments de connectique permettant de relier l'au moins un émetteur et le récepteur à une unité électronique externe au capteur de température ;
caractérisé en ce que lesdits éléments de connectique comprennent une fiche à quatre points de contact consistant en un premier et un deuxième points de contact destinés à véhiculer un signal sonore stéréophonique, un troisième point de contact destiné à fournir une référence de masse et un quatrième point de contact destiné à véhiculer un signal d'un microphone, lesdits éléments de connectique étant configurés pour relier l'au moins un émetteur au premier et au deuxième point de contact et pour relier le récepteur au quatrième point de contact.

Certains aspects préférés mais non limitatifs de ce capteur sont les suivants :
- il comprend un émetteur doté de deux électrodes, lesdits éléments de connectique étant configurés pour relier les électrodes de l'émetteur au premier et au deuxième point de contact, respectivement ;
- il comprend deux émetteurs chacun doté de deux électrodes agencés en vis-à-vis de part et d'autre de la structure résonnante, lesdits éléments de connectique étant configurés pour relier l'une des électrodes d'un émetteur au premier point de contact et l'une des électrodes de l'autre émetteur au deuxième point de contact ;

- le récepteur est doté de deux électrodes, lesdits éléments de connectique étant configurés pour relier l'une des électrodes du récepteur au troisième point de contact ;
- il comprend en outre un circuit de court-circuitage configuré pour court-circuiter un microphone relié au capteur de température par l'intermédiaire d'une prise jack femelle lors d'une mesure de température et pour déconnecter le récepteur du quatrième point de contact en l'absence de mesure de température.

L'invention vise également un procédé de mesure de température au moyen du capteur de température selon l'invention, comprenant les étapes consistant à fournir des signaux d'émission d'ondes acoustiques, de préférence en opposition de phase, sur le premier et le deuxième point de contact, recueillir un signal de réception d'ondes acoustiques sur le quatrième point de contact, et traiter le signal de réception d'ondes acoustiques pour déterminer une température de la structure résonnante.

L'invention s'étend également à un produit programme d'ordinateur comprenant des instructions de code pour l'exécution des étapes du procédé selon l'invention lorsque ledit programme est exécuté sur un ordinateur.

L'invention vise également une unité électronique comprenant une prise à quatre points de contact consistant en un premier et un deuxième points de contact destinés à véhiculer un signal sonore stéréophonique, un troisième point de contact destinée à fournir une référence de masse et un quatrième point de contact destinée à véhiculer un signal d'un microphone, caractérisée en ce qu'elle est programmée, lorsque la prise de l'unité électronique et la fiche à quatre points de contact du capteur de température selon l'invention sont connectées l'une à l'autre, pour fournir des signaux d'émission d'ondes acoustiques sur le premier et le deuxième point de contact de la prise, recueillir un signal de réception d'ondes acoustiques sur le quatrième point de contact de la prise et traiter le signal de réception d'ondes acoustiques pour déterminer une température.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- les figures 1a et 1b sont des schémas en vue latérale de la structure résonnante illustrant le positionnement et l'alimentation en signaux de l'au moins un émetteur d'ondes acoustiques et du récepteur d'ondes acoustiques selon deux modes de réalisation possible du capteur de température selon l'invention ;
- la figure 2 est un schéma en vue de dessus de la structure résonnante de la figure 1a illustrant la suspension de la structure résonnante ;
- les figures 3a et 3b sont des schémas illustrant une structure résonnante sous la forme d'une plaque repliée en forme de V et de W, respectivement ;
- la figure 4a représente la réponse spectrale du signal du récepteur sur une large fenêtre spectrale, pour deux températures de la structure résonnante, respectivement 23,5°C et 50°C ;
- la figure 4b représente la réponse spectrale du signal du récepteur sur une fenêtre spectrale centrée autour de 10,2 kHz, pour deux températures de la structure résonnante, respectivement 23,5°C et 7,4°C ;
- la figure 4c représente un exemple de mesure de température réalisée à l'aide du capteur selon l'invention inséré dans une glacière réversible chauffante-réfrigérante ;
- la figure 5 est un schéma électrique d'un module de sélection pouvant être intégré dans un capteur selon l'invention lorsque ce dernier est utilisé conjointement avec un casque-micro (« kit main libre ») ;
- la figure 6 est un schéma illustrant un exemple de structure en guirlande incluant deux capteurs de température selon l'invention et un casque-micro.

### EXPOSÉ DÉTAILLÉ DE MODES DE RÉALISATION PARTICULIERS

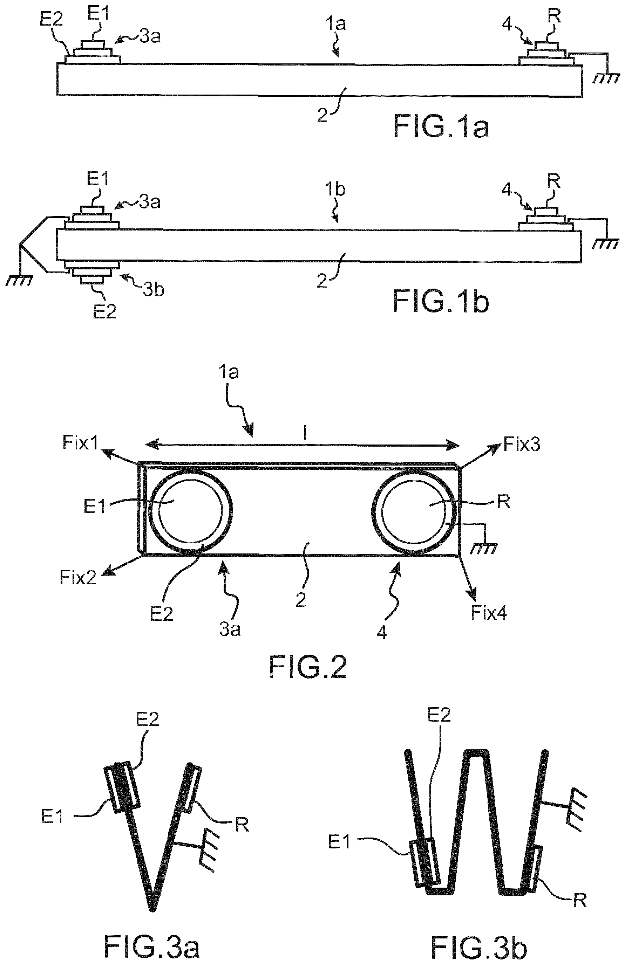

En référence aux figures 1a et 1b, l'invention propose un capteur de température 1a, 1b, comprenant :
- une structure 2 résonnante destinée à être mise en vibration pour résonner à une fréquence de résonnance qui varie en fonction de la température de la structure résonnante ;
- au moins un émetteur d'ondes acoustiques 3a, 3b monté sur la structure résonnante 2 et apte à lui transmettre des ondes acoustiques pour la faire vibrer à ladite fréquence de résonance ;
- un récepteur d'ondes acoustiques 4 monté sur la structure résonnante 2 apte à capter des ondes acoustiques se propageant dans la structure suspendue.

La structure résonante 2 est typiquement une plaque en métal ou en plastique propageant un mode antisymétrique de Lamb A₀. La matière plastique peut être injectée ou frittée, puis métallisée, le frittage de poudre apportant une grande liberté de conception de formes originales, en particulier pour replier la plaque. Le revêtement métallique, laiton ou or par exemple, permet d'éviter les salissures et favorise l'uniformisation de la température dans la plaque. Le métal est néanmoins préféré de par sa plus faible inertie thermique. Une plaque métallique présente en outre l'avantage de pouvoir servir de plan de masse. A titre d'exemples illustratifs, on peut recourir à une plaque en laiton, en aluminium, en cuivre ou encore dans un métal précieux tel que l'or ou l'argent.

La plaque 2 est de préférence rectangulaire. Sa longueur maximale est par exemple limitée à 10 cm de façon à ce qu'une fois repliée sur elle-même, sa dimension soit de l'ordre de 1 à 3 cm, comparable avec la taille d'une embase jack audio.

La plaque 2 est de préférence étroite, sa largeur étant typiquement comprise entre 1 et 10 mm. De telle manière, sa résonance peut être modélisée par un résonateur monodimensionnel et le nombre de pics de résonance est limité, ces derniers étant étroits et bien espacés.

L'épaisseur de la plaque est de préférence ajustée de façon à ce que sa fréquence de résonance tombe dans la partie supérieure du spectre audible (typiquement entre 10 kHz et 20 kHz). Elle est de l'ordre de quelques dizaines à quelques centaines de microns pour une plaque métallique et de l'ordre du millimètre pour une plaque plastique. La plaque est également mince pour pouvoir être repliée une ou plusieurs fois, ce qui permet de réduire son encombrement et son inertie thermique.

La plaque est par ailleurs suspendue dans une enceinte de protection. Comme représenté sur la figure 2, les quatre coins d'une plaque rectangulaire peuvent être utilisés comme points de fixation Fix1-Fix4, ces coins étant effectivement faiblement parcourus par les ondes acoustiques. Ces points de fixation peuvent se terminer par de petites poutres en forme de pavillons afin de permettre la suspension de la plaque dans son enceinte de protection. Compte tenu de sa faible épaisseur, il est aisé d'usiner dans le même matériau et par photolithographie la structure résonante suspendue à une structure porteuse périphérique qui est elle-même intégrée et fixée dans l'enceinte de protection. Le procédé consiste simplement à creuser dans un même matériau, par exemple métallique et de forme parallélépipédique, et par gravure profonde, la plaque centrale constituant la structure résonante, les poutres de fixation et la structure porteuse périphérique. La longueur des poutres et l'espace entre la structure résonante et la structure porteuse périphérique peuvent ainsi être réduits au minimum, c'est-à-dire avec une dimension caractéristique comparable à l'épaisseur de la structure résonante.

L'au moins un émetteur d'ondes acoustiques et le récepteur d'ondes acoustiques sont positionnés chacun à une extrémité de la structure résonnante longue et étroite. Il s'agit typiquement de transducteurs piézoélectriques, par exemple des bipeurs (*buzzer* en anglais) piézoélectriques ou des céramiques PZT (zirconate, titanate de plomb) collées sur la surface de la structure résonnante. Les transducteurs peuvent être collés au moyen d'une colle conductrice sur une plaque métallique, d'une colle époxy ou d'une colle cyanoacrylate. Ils peuvent également résulter de dépôts de couches piézoélectriques du type ZnO (oxyde de zinc) suivis de métallisation.

Comme représenté sur les figures 1a et 2, dans un mode de réalisation possible le capteur de température 1a comprend un transducteur émetteur 3a monté sur la structure résonnante 2 et apte à engendrer des ondes dans la structure résonnante sur une plage de fréquences comprenant au moins une fréquence de résonance de la structure résonnante. Le transducteur émetteur 3a comprend deux électrodes, une électrode supérieure recevant un signal sonore E1 et une électrode inférieure recevant un signal sonore E2. Le transducteur récepteur 4 comprend également deux électrodes, une électrode supérieure fournissant un signal R correspondant aux ondes acoustiques captées par le récepteur et une électrode inférieure reliée à la masse ou au plan de masse formée par la structure résonnante lorsque celle-ci prend la forme d'une plaque métallique.

Dans un autre mode de réalisation possible représenté sur la figure 1b, le capteur de température 1b comprend deux transducteurs émetteurs 3a, 3b montés sur la structure résonnante 2. Ces transducteurs sont agencés en vis-à-vis de part et d'autre de la structure résonnante, à une extrémité de celle-ci. Ils comprennent chacun une électrode supérieure et une électrode inférieure. Les deux électrodes supérieures reçoivent un signal sonore E1 et E2, respectivement. Les électrodes inférieures sont quant à elles raccordées à la masse, éventuellement constituée par la plaque métallique. On retrouve le transducteur récepteur 4 à l'autre extrémité de la structure résonnante. Ce mode de réalisation présente l'avantage de permettre de mieux sélectionner le mode Ao, en particulier pour les plastiques, et de doubler l'amplitude des ondes élastiques engendrées dans la structure résonnante 2.

Comme discuté précédemment, la structure résonnante peut être repliée sur elle-même de manière à multiplier sa longueur par rapport à une configuration plane, tout en en réduisant l'encombrement. Les figures 3a et 3b illustrent à cet égard une structure résonnante sous la forme d'une plaque repliée en forme de V et de W, respectivement, permettant de multiplier la longueur de la plaque par deux et quatre, respectivement. Le chemin parcouru par les ondes acoustiques est ainsi augmenté, améliorant de fait la sensibilité du capteur de température selon l'invention. Dans un exemple de réalisation, la plaque fait 50 mm de long par 7 mm de large, et est pliée en 2. Elle est repliée au milieu avec un rayon de courbure de 3 à 5 mm environ 5 à 10 fois plus grand que l'épaisseur de la plaque. L'espace intérieur est alors suffisant pour loger une embase jack femelle 4 points suspendue dont l'utilité sera détaillée ci-après.

Pour certaines applications, par exemple celles touchant au domaine de la santé, notamment les mesures intracorporelles, et les usages en tant que composant électronique discret pour circuit imprimé, on peut souhaiter réduire la taille du capteur pour qu'il atteigne par exemple 3 mm de diamètre par 5 à 10 mm de long de façon à ce qu'il puisse être inséré dans un tube cylindrique de diamètre inférieur à 4 mm. Dans cette configuration, les transducteurs piézoélectriques ont un diamètre qui ne dépasse pas 2 mm. Cela a pour inconvénient de réduire l'amplitude du signal de réception par diminution du rendement d'insertion entrée-sortie sous basse impédance de charge (c'est-à-dire la capacité du récepteur à produire une tension lorsqu'il est chargé par une résistance de faible valeur de l'ordre du kilo Ohm). D'autre part, la réduction de la longueur du résonateur doit être associée à une réduction de l'épaisseur de la feuille métallique pour continuer à travailler à fréquence constante, autour de 20kHz.

Pour préserver l'amplitude du signal de réception, on peut avoir intérêt à disposer les transducteurs en des points de focalisation de la contrainte vibratoire, par exemple aux points focaux d'un résonateur de forme elliptique. En outre, pour réduire les pertes engendrées par les poutres de suspension de la structure résonante, et le nombre de points de soudure à effectuer sur le capteur lors de la production, on peut préférer disposer les céramiques non pas sur la structure résonante, mais sous celle-ci. Les céramiques sont alors agencées directement sur la carte de circuit imprimé servant de support, la structure résonante étant disposée sur les céramiques.

Un exemple de réalisation est le suivant. Côté carte de circuit imprimé, on crée un masque de brasure avec vernis épargne de façon à ce que la brasure ne couvre qu'une petite partie de la surface de la céramique, par exemple l'équivalent d'une pastille de diamètre 0,1 à 0,5 mm. Au moment de la refusion, les pastilles PZT flottent sur un lit de brasure de hauteur environ 0,1 mm. L'autre face des céramiques est également enduite de pâte à braser et la plaque résonante est enfin posée et suspendue sur les deux pastilles PZT. L'ensemble est alors passé dans un four de refusion. Un point de soudure connectant la plaque résonnante à la masse est ensuite créé. Ceci peut être fait de deux façons. Dans un premier cas, la céramique dispose d'un retour d'argenture. Il y a alors deux pastilles sous l'une des céramiques. Plus aucun fil de raccordement n'est nécessaire. L'intérêt de cette configuration est de limiter les pertes acoustiques, le coût de la main d'oeuvre, ainsi que l'encombrement entre la plaque résonante et la surface de la carte de circuit imprimé, typiquement 0,2 mm, soit l'équivalent de l'épaisseur de la céramique. L'épaisseur totale du capteur s'en trouve réduite, ce qui améliore son utilisation en tant que capteur pelliculaire et réduit les risques de dommage en cas de choc violent (chute du capteur). La flexion de la plaque résonante voit sa course limitée soit par la carte de circuit imprimé, soit par l'enceinte de protection. Dans cette configuration, la carte de circuit imprimé type verre-époxy peut être remplacée par un film de Kapton® de faible épaisseur, par exemple 75 µm. Selon un autre mode de réalisation, les céramiques n'ont pas de retour d'argenture, de sorte qu'il faut relier les faces internes des céramiques (celles contre la plaque résonante) à la masse. Ceci peut être obtenu avec un seul point de soudure reliant le résonateur à une pastille de la carte de circuit imprimé.

L'invention propose plus particulièrement un capteur de température par une méthode acoustique exploitant directement le port audio d'une unité électronique externe au capteur de température et programmée pour fournir des signaux acoustiques à l'au moins un émetteur d'ondes acoustiques et pour recueillir le signal acoustique capté par le récepteur d'ondes acoustiques. L'unité électronique externe est typiquement un micro-ordinateur, une tablette, un téléphone intelligent (*smartphone*) et le port audio est un port jack, le plus souvent femelle, à quatre points de contact.

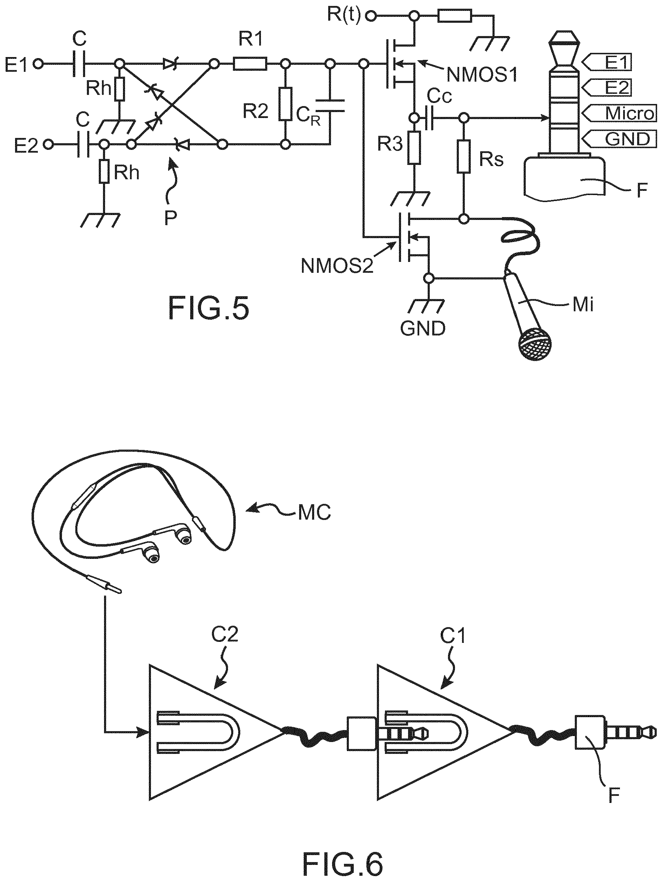

Pour ce faire, le capteur de température comprend des éléments de connectique permettant de relier l'au moins un émetteur et le récepteur à l'unité électronique externe au capteur de température. Ces éléments de connectique comprennent une fiche jack à quatre points de contact, typiquement une fiche mâle comme notamment représenté sur la figure 5. Les quatre points de contact de la fiche F consistent en un premier et un deuxième points de contact E1, E2 destinés à véhiculer un signal sonore stéréophonique, un troisième point de contact GND destiné à fournir une référence de masse et un quatrième point de contact Micro destiné à véhiculer un signal d'un microphone, lesdits éléments de connectique étant configurés pour relier l'au moins un émetteur au premier et au deuxième point de contact et pour relier le récepteur au quatrième point de contact.

Le signal sonore stéréophonique se décompose en un canal gauche que l'on retrouve sur le premier point de contact et en un canal droit que l'on retrouve sur le deuxième point de contact, ces canaux permettant d'appliquer les signaux acoustiques E1 et E2 à l'au moins un émetteur du capteur de température. En d'autres termes, l'au moins un émetteur exploite les signaux habituellement envoyés sur un casque stéréo, tel que celui d'un kit audio main libre avec microphone intégré (casque-micro), pour venir faire vibrer la structure résonnante.

Le signal acoustique capté par le récepteur est quant à lui remonté à l'unité électronique externe en exploitant le signal habituellement renvoyé par un microphone, tel que le microphone d'un kit audio main libre avec microphone intégré.

Les fréquences de résonance de la structure résonnante sont alors choisies en tenant compte des limitations des composants électroniques dédiés à l'audio de l'unité électronique externe. Les composants audio d'un téléphone intelligent permettent des fréquences d'échantillonnage de 48 kHz ou 96 kHz. Les versions haut de gamme vont aisément jusqu'à 192 kHz. La numérisation se fait sur 16 ou 24 bits de quantification. On est donc simultanément limité en bande passante, ce qui impose aux fréquences de résonance de rester typiquement inférieures à 20 kHz (en bande audible).

La consommation électrique du capteur ne dépasse pas le milliampère en continu. En cela, l'usage de petites céramiques piézoélectriques dont la capacité totale intrinsèque est de l'ordre de 5nF limite le besoin de courant crête à 0.6 mA à 20 kHz par Volt de tension appliquée. Sachant que la tension de sortie aux bornes des écouteurs d'un smartphone ou d'un PC dépasse rarement 3 Vcrête, on en déduit que le besoin maximal de courant efficace est voisin de 1,2 mArms à 20 kHz (et beaucoup moins par mesures intermittentes).

Deux résistances de charge, l'une aux bornes du transducteur de réception, l'autre aux bornes des transducteurs d'excitation, peuvent être prévues pour éviter les chocs pyroélectriques et électrostatiques qui pourraient endommager les amplificateurs opérationnels lorsque l'on insère la fiche jack du capteur dans la prise femelle de l'unité électronique externe. Pour les transducteurs d'excitation, des résistances de valeurs élevées comprises entre 100 kOhms et 10 MOhms conviennent. Pour le transducteur de réception, on peut prévoir une résistance de 1,4 kOhms au minimum pour que l'unité électronique reconnaisse la présence d'un microphone externe. En effet, par défaut une impédance élevée ou infinie est reconnue comme un micro externe tandis qu'une impédance faible inférieure à 1k ou un court-circuit active le microphone interne de l'unité électronique car celle-ci suppose que l'on a branché un casque audio 3 points ou activé la fonction muet (« mute ») à l'aide d'une résistance shunt de 50 Ohms.

En outre, pour avoir un pic de résonance symétrique permettant de calculer le décalage quelle que soit l'impédance d'entrée de la carte son de l'unité électronique externe, il vaut mieux mettre le récepteur sous basse impédance de charge, typiquement 1,5 à 10 kOhms pour une raison tenant au modèle électrique équivalent d'un résonateur piézoélectrique. Ce modèle est caractérisé par une impédance faible à sa résonance série et une impédance élevée à sa résonance parallèle. En effet, on cherche aussi à éviter les couplages capacitifs avec des sources de tension haute impédance sachant que l'amplificateur opérationnel associé à un microphone a en général une impédance d'entrée très élevée. L'amplitude du signal de sortie R(t) reste ainsi faible juste avant la résonance série tandis que la résonance parallèle suivant la résonance série reste masquée par le fait que l'impédance de charge est bien plus petite que l'impédance électrique équivalente associée au capteur dans le cas d'une résonance parallèle. Aucune tension associée à une résonance parallèle ne peut ainsi être détectée. Seule la résonance série pour laquelle la source piézoélectrique se comporte en source de courant est ainsi bien détectée. Cette configuration est également favorable à un pic de résonance bien symétrique et une linéarité accrue.

Les éléments de connectique peuvent également comprendre un cordon destiné à relier l'au moins un émetteur et le récepteur à la fiche jack. L'usage de matériaux Téflon FEP peut être privilégié pour assurer l'isolement électrique des voies internes tandis qu'un revêtement silicone souple peut être privilégié pour la gaine externe. Ce revêtement est de préférence suffisamment épais pour assurer, d'une part, globalement une section circulaire du cordon de petit diamètre (par exemple 2,5 mm), préférable esthétiquement et évitant l'enchevêtrement du cordon, d'autre part, pour permettre l'étanchéité par pincement/écrasement partiel du cordon à l'entrée d'un boîtier logeant la plaque résonante. Ces deux matériaux offrent des températures de fonctionnement jusqu'à 260°C en pointe. Le Téflon FEP peut en outre être extrudé, contrairement au Téflon PTFE.

Le cordon est en outre avantageusement constitué de deux câbles coaxiaux, l'un affecté au transport des signaux d'émission E1 et E2, l'autre à la réception du signal microphonique. L'âme du câble coaxial de réception est connectée au signal de réception R(t) tandis que la tresse est connectée à la masse. Ceci évite les couplages capacitifs entre l'entrée et la sortie sur les cordons très longs.

Les éléments de connectique peuvent également comprendre un séparateur jack multi voies en parallèle faisant office de répartiteur.

On relèvera que selon les constructeurs, de possibles inversions entre les points de contact d'une fiche jack peuvent être observées. Une telle inversion peut conduire à un possible couplage capacitif délétère entre le signal d'émission et le signal de réception. Cette inversion peut être contrecarrée en prévoyant une adaptation en production.

A contrario, on peut exploiter cette particularité pour détecter un dysfonctionnement lié à un problème de câblage. Lorsque le signal de réception R(t) passe par l'âme du câble coaxial tandis que la tresse constitue la masse, il y a alors une bonne isolation entrée-sortie : le signal de réception est purement piézoélectrique et représentatif de la résonance série. En revanche, lorsque le signal de réception est connecté à la tresse tandis que l'âme constitue la masse, il y a apparition d'un couplage capacitif entre les transducteurs d'émission et de réception qui se superpose au signal piézoélectrique. Aux résonances série et parallèle, la phase du signal piézoélectrique change fortement de sorte que les interférences entre le signal capacitif et le signal piézoélectrique engendrent un minimum et un maximum d'amplitude autour de la fréquence de résonance. La présence d'une résonance et d'une antirésonance au voisinage de la fréquence nominale est alors caractéristique d'un couplage capacitif parasite.

Dans un mode de réalisation privilégié, l'unité électronique externe est configurée pour, au cours d'une mesure de température, transmettre des signaux E1 et E2 en opposition de phase de manière à augmenter le signal engendré dans la structure résonnante. Ce mode de réalisation présente en outre l'avantage de limiter les nuisances en mode conversation téléphonique car les signaux acoustiques E1, E2 peuvent alors être émis en phase ce qui neutralise l'émission des ondes dans la structure résonnante.

Dans un mode de réalisation, l'unité électronique externe est configurée pour déterminer la température de la structure résonante à partir des signaux provenant du récepteur via le quatrième point de contact et l'entrée microphone du port audio de l'unité électronique externe.

Dans un autre mode de réalisation, le capteur de température intègre un microcontrôleur programmé de manière à déterminer la température de la structure résonnante. L'information de température ainsi déterminée peut être communiquée à l'unité électronique externe via le quatrième point de contact. Le microcontrôleur peut faire appel à des moyens connus de mesure de température, par exemple à l'aide de thermistances ou des capteurs intégrés au microcontrôleur. Le microcontrôleur peut également lui-même engendrer des signaux électriques pour mettre en résonance la structure résonante et quantifier ensuite la fréquence de résonance de la structure.

Dans ce mode de réalisation, la différence de potentiel des signaux stéréo E1 et E2 peut être redressée par un pont redresseur de tension suivi d'un condensateur réservoir et d'un régulateur de tension alimentant en tension le microcontrôleur faible consommation et faible tension. Le microcontrôleur réalise alors la détermination de la température lors de sa mise sous tension et la transmet à l'unité électronique externe, via le quatrième point de contact du capteur de température, par modulation de fréquences de type PWM (*Pulse Width Modulation*) avec filtrage passe-bas. Les signaux E1 et E2 ne sont donc plus utilisés pour exciter les ondes élastiques dans la structure résonante, mais servent simplement à construire une source de tension d'alimentation pour le microcontrôleur. Ce procédé présente l'avantage de rendre le capteur de température totalement compatible avec l'usage simultané d'un kit main libre en mode écoute musicale.

La mesure peut n'être activée que lorsque la fréquence d'excitation est au-dessus de la fréquence de coupure d'un filtre passe-haut agencé en entrée du pont redresseur de tension. La fréquence de coupure est choisie au-dessus d'un seuil (par exemple à 15 kHz) à partir duquel on sait que les signaux E1 et E2 ne correspondent pas à des signaux de musique, ceci pour éviter toute activation de la mesure de température par de la musique.

La mesure de la température réalisée à l'aide de l'au moins un émetteur excité par des signaux habituellement envoyés sur un casque stéréo et du récepteur renvoyant une information de température sur l'entrée microphone d'un port audio est la suivante.

La mesure de température se fait par émission d'une impulsion modulée en fréquence, sinusoïdale ou carrée, couvrant typiquement la plage 5 kHz à 20 kHz, et préférentiellement la plage de variation du pic de résonance le plus élevé permis par la fréquence d'échantillonnage des composants audio de l'unité électronique externe sur la plage de température de fonctionnement envisagée.

Les signaux émis E1 et E2 contiennent deux périodes de temps où le signal est nul, avant et après l'impulsion. Cela permet d'une part de s'affranchir des questions de synchronisation. En effet, la plupart des systèmes d'exploitation peuvent gérer des processus et répondre à des requêtes d'interruption avec un temps de latence qui peut nécessiter plusieurs dizaines de millisecondes. Lorsque le signal E1 est émis, il faut que l'on soit sûr que la numérisation du signal R à la fréquence d'échantillonnage Fe a commencé. Puisque l'on n'est pas sûr de l'instant exact de début de numérisation, on prévoit un période de sécurité bien supérieure au délai de service du système d'exploitation. On sait alors que l'acquisition du signal R est connue à une translation près dans le temps. Or la transformée de Fourier d'un signal R retardé n'introduit qu'un déphasage dans l'espace des fréquences, mais ne change pas le spectre en module. Ainsi, le fait de travailler dans l'espace des fréquences présente l'intérêt de permettre de s'affranchir de tout signal de synchronisation.

Un second intérêt est une réduction des lobes secondaires de la fenêtre rectangulaire de la transformée de Fourier (qui peut être pondérée par une fenêtre de Hamming). La fréquence de balayage démarre à une fréquence F1 (par exemple F1 = 3000 Hz) et s'arrête à une fréquence FN (exemple FN=20 000 Hz). La fréquence peut être est incrémentée selon une loi du type : Fr = F1 puis Fr = Fr + Fr/(NbrePrd*2) où NbrePrd désigne le nombre de période pour chaque fréquence avec un nombre de périodes initiales par exemple égal à 50.

Le balayage est tel que la densité spectrale d'énergie du signal d'excitation est relativement stable, sans fluctuer de plus de 50% de sa valeur moyenne sur toute la plage de variation de la fréquence de résonance de la plaque. De telle manière, on s'assure que quelle que soit la température, suffisamment de signal est disponible aux bornes du récepteur pour permettre de déterminer le décalage du pic de résonance par rapport à un pic de référence identifié à une température de référence TRef1. En particulier, le rendement de conversion piézoélectrique est suffisant pour que les signaux d'émission E1 et E2 d'amplitude 2 Vpp appliqués aux bornes des transducteurs émetteurs engendrent un signal de réception R d'amplitude suffisante, comparable à celle d'un signal microphonique. L'impulsion audio dure typiquement entre 10 ms et 10 secondes selon la résolution fréquentielle et donc de température souhaitée.

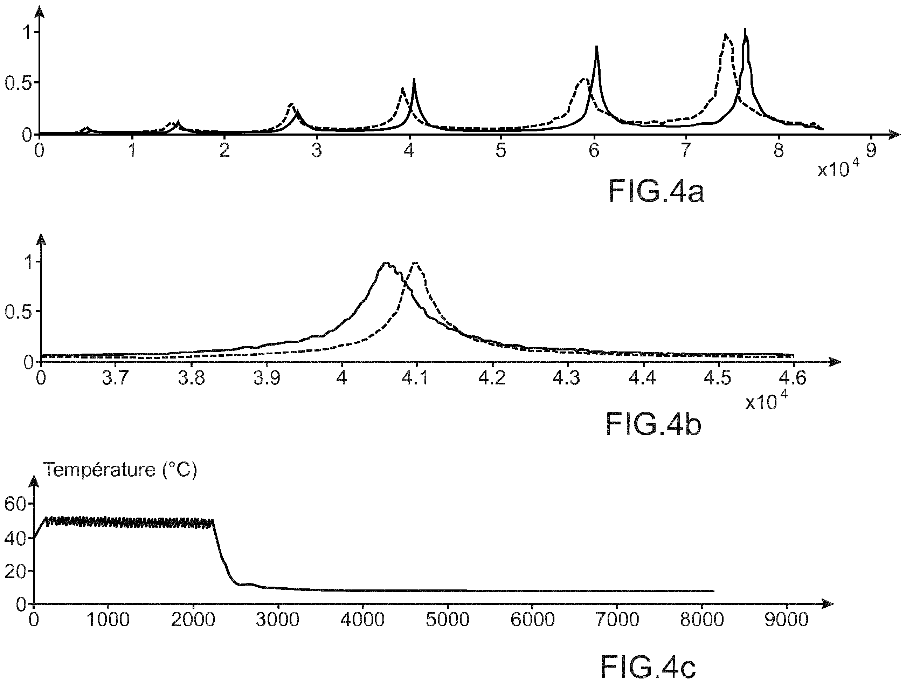

La synchronisation entre l'émission et la réception n'est pas nécessaire. Dès que le signal d'émission est envoyé sur les voies E1 et E2, l'échantillonnage du signal de réception sur l'entrée microphone peut démarrer de façon synchrone ou asynchrone. Durant cette étape, on fait en sorte que la longueur d'acquisition commence bien avant l'émission et continue bien après l'arrivée du signal de réception. De cette façon, on réalise un traitement du signal consistant en un « zero padding », c'est-à-dire en l'adjonction d'échantillons de valeur nulle avant et après l'instant d'arrivée du signal de réception pour augmenter la résolution fréquentielle du signal d'acquisition qui est analysé par transformée de Fourier discrète. Typiquement, on cherche à disposer d'une résolution fréquentielle de 1 Hz pour que le thermomètre ait une résolution en température de un dixième de degré Celsius au moins. La longueur d'acquisition est donc typiquement d'au moins 1 seconde. Dans l'exemple donné sur les figures 4a-4c, l'acquisition se fait sur 5 secondes, la résolution fréquentielle est 0,2 Hz et la résolution en température de quelques centièmes de degré Celsius.

Lors de la mesure, on peut en outre vérifier que le signal de réception ne sature pas l'entrée d'un convertisseur analogique-numérique. Au besoin, on diminue le gain du microphone et on calcule l'énergie moyenne du signal à partir du module des composantes spectrales de sa transformée de Fourier, dans la bande de fréquence de travail. Cela permet d'identifier un éventuel dysfonctionnement du capteur en cas de trop faible valeur.

Puis, la composante spectrale de plus forte amplitude sert à normaliser le spectre du signal de réception sur la plage de variabilité de la fréquence de résonance. Mais on peut également normaliser le spectre par rapport au pic dont on surveille le décalage fréquentiel en fonction de la température. On peut choisir de prendre un pic plus basse fréquence si l'on désire privilégier la plage de mesure à la résolution de température.

Le spectre est ainsi acquis à deux températures de référence Tref1, Tref2, par exemple à température ambiante et à 50°C pour les métaux. Pour la surveillance du gel ou de la température corporelle d'une personne, on peut aussi prendre Tref1 à 0°C et Tref2 à 37°C.

Le décalage entre les pics de résonance normalisés est quantifié par calcul de la fonction d'intercorrélation des pics de résonance aux deux températures de référence. Pour les métaux, et les plastiques injectés on estime que le décalage fréquentiel est proportionnel à la fréquence de travail ainsi qu'à la différence de température et au coefficient de variation en température des ondes antisymétriques se propageant dans le matériau constituant le plaque (que l'on peut estimer un peu inférieur à -0.1%/°C, mais qui dépend d'un matériau à l'autre).

Pour une température inconnue Ti, on mesure alors le décalage Décalageli qui peut être positif ou négatif par rapport à l'une des températures de référence, par exemple la plus froide appelée TRef1 et l'on applique une règle de trois pour déterminer la température inconnue Ti en écrivant : Ti= TRef1 + (TRef2-TRef1)*Décalage1i/Décalage12.

Pour les plastiques frittés qui ont un comportement quadratique en température, on prend trois températures de référence, par exemple -15°C, 20°C et 50 °C, et on interpole une loi de variation quadratique du décalage fréquentiel. Puis une température inconnue est déterminée par calcul du décalage à la température Ti par rapport à une température de référence et application de la loi de correspondance quadratique pour ce décalage.

L'étalonnage du capteur nécessite de connaître deux paramètres, d'une part la fréquence de résonance de la plaque résonante à une température nominale, d'autre part le coefficient de décalage fréquentiel par degré Celsius (environ 0,04 °C/0,2 Hz pour le laiton). Pour une même plaque résonante, la fréquence nominale peut fluctuer légèrement en fonction de la précision de positionnement des capteurs (positionnement à 50 µm près typiquement), de l'épaisseur de colle ou de brasure et de la taille des plots de brasure. Un biais de 0,2Hz sur la fréquence nominale engendre une erreur d'étalonnage de 0,04°C. En supposant que les conditions de fabrication engendrent une fréquence nominale précise à 0,1% près, soit 18 Hz pour une fréquence nominale de 18kHz, les capteurs sont alors produits avec une erreur sur la fréquence nominale représentant une erreur de +/-2°C.

Pour améliorer la précision et réduire par exemple l'erreur à +/- 0.1 °C, on peut chercher à ajuster la fréquence nominale sur au moins une plage d'une centaine de Hertz une fois que le capteur est soudé. Cela peut être obtenu par usinage mécanique ou préférentiellement chimique de la plaque résonante. La réduction de l'épaisseur d'une plaque métallique, par exemple à l'aide d'un acide, conduit à diminuer la fréquence de travail, tandis que la diminution de la longueur de la plaque augmente la fréquence de travail. Dans un mode de réalisation, on vient prévoir une queue métallique d'ajustement de quelques centaines de microns de long et une centaine de micron de large à une extrémité de la plaque résonante dont on vient ajuster la longueur pour augmenter la fréquence nominale, tandis que la réduction de l'épaisseur sert à diminuer la fréquence. On relèvera que pour un matériau donné, par exemple du laiton, et des dimensions déterminées, une fois le capteur fabriqué, il est aisé de constituer des abaques déterminant le décalage fréquentiel pouvant être obtenu en fonction du temps d'exposition à un acide donné de Ph connu.

Par ailleurs, la fréquence nominale du capteur peut avoir tendance à diminuer avec le vieillissement en raison de l'oxydation de la plaque résonante et des poussières qui s'y déposent réduisant sa rigidité apparente. Dans un mode de réalisation privilégié, on vient protéger la plaque résonante par une enceinte étanche qui permet d'éviter le dépôt de poussière et on vient bloquer le processus d'oxydation en venant protéger la plaque résonante par une couche de passivation du résonateur. Il est en outre possible d'introduire un coefficient d'ajustement de la fréquence nominale de résonance du capteur fonction du vieillissement du capteur tel que calculé à partir d'une date de fabrication, par exemple un coefficient de l'ordre de quelques ppm/an.

L'enceinte peut être outre être enrobée par un revêtement silicone ayant un effet de filtrage passe-bas du spectre d'excitation passif engendré par d'éventuels chocs ou vibrations mécaniques (telles que de frottements rugueux sur des surfaces dures ou texturées).

On a représenté sur la figure 4a la réponse spectrale du signal du récepteur sur une fenêtre spectrale couvrant la gamme [3kHz-20kHz], pour deux températures de la structure résonnante, respectivement 23,5°C (en traits pleins) et 50°C (en traits pointillés). L'acquisition est réalisée sur 5 secondes et la résolution spectrale est de 0.2Hz. On retrouve ainsi 85 000 composantes spectrales entre 3-20 kHz. Le calcul du décalage (en nombre de composantes de 0,2 Hz) est réalisé par le calcul de la fonction d'intercorrélation sur une fenêtre de 2 kHz centrée autour du dernier pic (autour de 17 kHz). Le décalage atteint 2020, soit 404 Hz (soit 2.3%) sur une plage de 27°C.

On a représenté sur la figure 4b la réponse spectrale du signal du récepteur sur une fenêtre spectrale de largeur 2kHz centrée autour de 10,2 kHz, pour deux températures de la structure résonnante, respectivement 23,5°C (en traits pleins) et 7,4°C (en traits pointillés). Le calcul du décalage (en nombre de composantes de 0,2 Hz) est réalisé par le calcul de la fonction d'intercorrélation sur la fenêtre de 2 kHz.

Le figure 4c représente quant à celle un exemple de mesure de température réalisée à l'aide du capteur selon l'invention inséré dans une glacière réversible chauffante-réfrigérante. La glacière opère tout d'abord une régulation chauffante entre 47°C et 51°C, avant de basculer dans un mode réfrigérant.

La figure 4b révèle un élargissement du pic de résonance avec l'élévation de température (courbe en traits pleins (chaud) par rapport à la courbe en traits pointillés (froid)). Le calcul d'un décalage précis nécessite que cet élargissement reste symétrique par rapport à la fréquence centrale. Or l'élargissement s'accompagne également d'un affaissement de la résonance et de l'apparition de pics de distorsion reflétant le spectre d'émission. La mesure peut alors perdre en linéarité du fait de l'apparition de non-linéarités locales sur de petites plages de température, et ce même si globalement la pente reste linéaire. Ainsi, pour certaines colles époxy du commerce, la mesure peut devenir difficilement exploitable au-delà de 80°C.

Pour travailler sur une plage de mesure étendue, par exemple de -200°C à +200°C, et assurer une bonne linéarité du dispositif, il est préférable que la largeur du pic soit constante avec la température et donc que la rigidité du collage soit assurée sur toute la plage de température. Cette condition est assez bien respectée avec une brasure métallique, alors qu'elle peut fluctuer d'une colle polymère à l'autre, en particulier en fonction de la température de transition vitreuse Tg de la colle.

Avec une brasure métallique, la température maximale de fonctionnement correspond soit au point de fusion de la soudure (eutectique étain - argent à 217°C et couramment avec d'autres alliages jusqu'à 260°C), soit à la température de Curie de la céramique PZT (par exemple autour de 330°C pour certaines céramiques PZT du commerce).

Pour ce qui concerne l'usage de colles polymères, on utilise de préférence des colles dont la rigidité reste bonne aux températures élevées. Le paramètre critique des colles polymère est la température de transition vitreuse Tg. Des Tg élevées se retrouvent dans les colles polyimides ou certaines colles époxy.

Comme indiqué précédemment, le pic de résonance peut être bruité par des pics de distorsion secondaires qui ne se décalent pas avec la température. Ces pics secondaires reflètent le contenu du spectre d'excitation et pas du tout celui des résonances mécaniques. Le signal de réception R(t) s'exprime par R(t) = E(t) * H(t) où H(t) est la réponse impulsionnelle entrée-sortie de la plaque résonante, E(t) est le signal d'excitation temporel et * désigne le produit de convolution. Après application de la transformée de Fourier, on a dans l'espace des fréquences R(f)=E(f).H(f).

Dans le cas où l'excitation est une impulsion modulée en fréquence, entre une fréquence Fmin et une fréquence Fmax, le signal E(f) n'est pas parfaitement plat mais chahuté. Autour d'une fréquence de résonance donnée f₀, H(f₀) est pondérée par le spectre d'excitation E(f). Si la résonance s'étale sur quelques dizaines de Hertz, les irrégularités du spectre d'excitation se retrouvent directement dans le spectre de sortie R(f). Afin de pallier à cet inconvénient, on peut venir normaliser le module du spectre de sortie R(f) par le module du spectre d'excitation E(f). Lorsque l'algorithme FFT (« Fast Fourier Transform ») est appliqué, il est alors nécessaire que les deux signaux temporels (excitation et réception) soient numérisés avec le même nombre d'échantillons de façon à ce qu'ils partagent les mêmes composantes fréquentielles. Néanmoins, d'un point de vue pratique, pour la partie émission, il n'est pas forcément nécessaire d'émettre un signal de durée égale au signal d'acquisition (par exemple durant les 5 secondes de réception). A titre d'exemple, on peut émettre un signal d'excitation comprenant la rafale souhaitée entres les fréquences Fmin et Fmax durant 3 secondes, puis compléter mathématiquement le signal en faisant du « zéro padding » jusqu'à 5 secondes pour compléter et égaler le nombre d'échantillons du signal de réception.

Dans un mode de réalisation possible de l'invention, le capteur de température est lui-même équipé d'un port audio, typiquement un jack femelle à quatre points de contact, sur lequel peut être branché un casque stéréo ou un casque-micro. Dans un autre mode de réalisation, le capteur de température peut être intégré dans un casque stéréo ou dans un casque-micro, en étant par exemple regroupé dans un même boitier avec le microphone d'un casque-micro.

Prenant le cas d'un casque-micro, en dehors d'éventuels moyens détaillés ci-après mis en oeuvre pour limiter les perturbations réciproques du casque-micro et du capteur de température, les deux dispositifs sont connectés électriquement en parallèle, c'est-à-dire les écouteurs du casque avec l'au moins un émetteur et le récepteur R avec le microphone.

On relèvera que la mesure de la température est pratiquement transparente pour l'utilisateur lorsqu'il écoute de la musique. En effet, la fréquence de résonance de la plaque est choisie dans la partie supérieure de la bande audible, voire dans la bande ultrasonore lorsque les composants audio de l'unité électronique externe le permet. Le signal de mesure de température E1, E2 n'est donc quasiment pas perceptible. Il peut en outre être superposé au signal musical pour n'être plus du tout perceptible, bien qu'en pratique, il est préférable de séparer le signal de mesure de température du signal musical, donc les rendre exclusifs l'un de l'autre pour éviter d'introduire de la distorsion (sachant que les fluctuations de fréquence sont très faibles, quelques ppm par centième de degré Celsius). Le choix d'une mesure transparente ou pas peut être proposé en paramétrage à l'utilisateur en fonction de la fréquence de mesure et de la résolution de température souhaitées.

En outre, la résolution de température souhaitée peut être paramétrée selon un mode dit fixe avec une valeur de résolution fixant la longueur d'acquisition et un intervalle de mesure ou selon un autre mode dit adaptatif si l'on anticipe que l'environnement de travail subit des chocs thermiques. Dans ce mode adaptatif, la longueur d'acquisition et l'intervalle de mesure sont variables. La longueur est volontairement courte au départ, par exemple de 0.1 seconde de façon à privilégier la dynamique et permettre le plus rapidement possible une estimation de la température à 1°C près. Puis, si la variation de température reste plus faible qu'un certain seuil, par exemple de 2°C entre deux mesures successives, la longueur de la fenêtre d'acquisition est progressivement rallongée jusqu'à une valeur limite définie par un autre seuil ainsi que l'intervalle de mesure (qui est toujours supérieur ou égal à la longueur d'acquisition) de façon à affiner la mesure de température. A l'inverse, si la mesure de température change significativement entre deux mesures successives, l'intervalle entre deux mesures de température est automatiquement réduit de façon à ce que l'intervalle de mesure se rapproche le plus possible de la longueur d'acquisition pour la résolution en cours. Si alors la différence entre deux mesures successives reste supérieure à la résolution en cours, alors, la longueur d'acquisition et donc la résolution sont automatiquement diminuées par paliers jusqu'à ce que la différence de température entre deux mesures successives redevienne inférieure à un multiple de la résolution en cours. On peut ainsi allier dynamique et précision en fonction de l'environnement de travail.

Un exemple de moyen permettant de limiter les perturbations réciproques d'un casque-micro et du capteur de température est détaillé ci-après en référence à la figure 5. Le capteur de température comporte à cet effet un module de sélection de la fonction « mesure de température » ou de la fonction « utilisation du casque-micro ». Ce module comprend un circuit de court-circuitage du microphone du casque-micro, fonction de la nature des signaux E1 et E2 issus du premier et du deuxième point de contact, pour court-circuiter le microphone le microphone lors d'une mesure de température et pour déconnecter le récepteur en l'absence de mesure de température.

Ce circuit peut comprendre un filtre passe-haut présentant par exemple une fréquence de coupure autour de 15 kHz et composé de la capacité C et de la résistance Rh. Le filtre passe-haut est suivi d'un pont de diodes redresseur P des signaux stéréo E1 et E2 issus du premier et du deuxième point de contact. Le pont redresseur P est suivi d'un étage comprenant un pont de résistances R1 (faible) et R2 (grande) permettant d'assurer une charge rapide et une décharge lente d'une capacité réservoir C_{R} en aval du pont de résistances, la capacité réservoir C_{R} servant à polariser la grille d'un premier transistor NMOS1 et d'un deuxième transistor NMOS2.

La résistance R1 limite le courant de charge de la capacité réservoir C_{R} à quelques milliampères et vaut typiquement 1 kOhm, tandis que la capacité réservoir C_{R} vaut typiquement 1µF. Le temps de charge à 95% est alors autour de 30 ms. La résistance R2 conditionne le temps de décharge de la capacité réservoir C_{R} et donc la durée d'ouverture des transistors et vaut typiquement 1 à 10 MOhms, pour une durée d'ouverture de l'ordre de la seconde.

Lorsque les signaux E1 et E2 issus du premier et du deuxième points de contact sont en opposition de phase, à une fréquence supérieure à la fréquence de coupure du filtre passe-haut, le différentiel est suffisant pour rendre passant les transistors NMOS1 et NMOS2.

En devenant passant, le premier transistor NMOS1 connecte le récepteur du capteur de température qui délivre le signal R au quatrième point de contact « Micro » et de là à l'entrée microphone du PC ou smartphone. Un condensateur de découplage Cc est prévu côté source du premier transistor NMOS1 pour éviter que sa tension de source soit comparable à la tension de grille ce qui empêcherait le premier transistor NMOS1 de devenir passant.

En outre, pour que le microphone Mi du casque-micro ne perturbe pas la mesure, on exploite la même tension de grille pour commuter à la masse le deuxième transistor NMOS2 branché en impédance de charge du microphone Mi. En aval du deuxième transistor NMOS2, on retrouve une résistance série Rs reliant le microphone Mi au quatrième point de contact.

Ainsi, en l'absence de mesure de température, le microphone Mi est toujours normalement connecté via la résistance série Rs (environ 1 kOHM) tandis que le récepteur R est chargé par une haute impédance électrique et n'est donc pas connecté. En mode de mesure de température, les signaux stéréo E1 et E2 sont en opposition de phase. Le premier transistor NMOS1 est passant car sa tension de seuil est basse et typiquement inférieure à 2V, ce qui relie le récepteur R au quatrième point de contact, tandis que le deuxième transistor NMOS2 associé au microphone Mi est court-circuité à la masse. Le récepteur R est alors chargé par la résistance série Rs qui a l'un de ses terminaux connecté à la masse.

Pendant la mesure de température, le microphone Mi est donc inactif. Cette situation est favorable car il n'y a pas de conversation téléphonique et l'opération de mesure de température ne dure tout au plus que quelques centaines de millisecondes. Dès la fin de la mesure, l'émission stéréo avec E1 et E2 en opposition de phase cesse et la tension de grille des transistors NMOS 1 et NMOS2 chute, ce qui reconnecte le microphone Mi et déconnecte le récepteur R.

En mode écoute musicale, le déphasage entre les signaux des canaux droit et gauche est quelconque. La probabilité que les signaux soient en opposition de phase n'est pas nulle et il est possible que le microphone Mi soit inactivé. Mais ce n'est pas gênant car il ne sert alors pas.

Lors d'une prise de conversation téléphonique, le système d'exploitation du smartphone ou du PC est informé d'un éventuel processus de mesure de température en cours. Il peut reprendre la main et donner la priorité au mode téléphone. La désactivation du capteur de température dure au plus 1 seconde, correspondant au temps de décharge des tensions de grille des transistors NMOS1 et NMOS2.

Puis les signaux des écouteurs sont émis en phase. Il est donc très peu probable que les signaux acoustiques d'une conversation téléphonique contiennent des phases électriques opposées sur une durée suffisante pour activer les transistors NMOS 1 et NMOS2 et désactiver le microphone, ce qui constituerait un dysfonctionnement.

On retiendra par ailleurs que l'on peut brancher plusieurs capteurs de température électriquement en parallèle et physiquement en guirlande. Comme représenté sur la figure 6, au lieu de brancher un casque-micro MC, on peut effectivement enfiler les capteurs C1, C2 les uns derrière les autres. Chaque capteur peut être associé à une structure résonnante ayant une fréquence caractéristique propre. A titre d'exemple, on peut choisir de jouer sur la longueur et l'épaisseur d'une plaque pour que sa fréquence soit différente de la plaque du capteur suivant, par exemple espacée de 500 Hz de la plaque suivante.

On peut également former un système à deux groupes de N capteurs. Les deux groupes partagent les mêmes plages de fréquence, mais les capteurs du premier groupe sont alimentés uniquement avec le signal Droit E1(t) et les capteurs du second group sont alimentés avec le signal Gauche E2(t). Dans chacun des groupes, les capteurs peut être légèrement différents les uns des autres pour ce qui concerne l'épaisseur ou/et la longueur de la plaque résonante de façon à ce que chacun soit identifiable sur sa plage de fréquence de travail propre large de 500 Hz à 2kHz et correspondant à la plage de décalage attendu sur la plage de température de travail souhaitée. La mesure est simultanée pour tous les capteurs d'un même groupe. Il n'y a qu'un seul signal de réception R(t) pour tous les capteurs connectés en parallèle. Les groupes sont mesurés séquentiellement.

La configuration minimale consiste en deux groupes de N=1 capteur. Les capteurs sont identiques. L'un est connecté à l'écouteur Droit, l'autre à l'écouteur Gauche. L'électrode interne de chaque transducteur émetteur est mise à la masse. Les transducteurs récepteur sont connectés en parallèle et fournissent le même signal R(t). Dans cette configuration, placer les signaux E1 et E2 en phase ou en opposition de phase ne crée aucune différence de fonctionnement.

L'invention n'est pas limitée au capteur de température tel que précédemment décrit, mais s'étend également à un procédé de mesure de température au moyen du tel capteur de température, le procédé comprenant les étapes consistant à :
- fournir des signaux d'émission d'ondes acoustiques, de préférence en opposition de phase, sur le premier et le deuxième point de contact de la fiche du capteur ;
- recueillir un signal de réception d'ondes acoustiques sur le quatrième point de contact de la fiche du capteur;
- traiter le signal de réception d'ondes acoustiques pour déterminer une température de la structure résonnante.

L'invention s'étend également à un produit programme d'ordinateur comprenant des instructions de code pour l'exécution des étapes de ce procédé lorsque ledit programme est exécuté sur un ordinateur.

Et l'invention vise aussi l'unité électronique externe à laquelle le capteur de température peut être relié par l'intermédiaire de sa fiche à quatre points de contact laquelle vient se connecter à une prise à quatre points de contact de l'unité électronique, typiquement une prise jack femelle. L'unité électronique est configurée, lorsque la prise de l'unité électronique et la fiche du capteur de température sont raccordées entre elles, pour fournir des signaux d'émission d'ondes acoustiques sur le premier et le deuxième point de contact de sa prise, recueillir un signal de réception d'ondes acoustiques sur le quatrième point de contact de sa prise et traiter le signal de réception d'ondes acoustiques pour déterminer la température de la structure résonnante du capteur de température.

## Revendications

1. Capteur de température (1a, 1b), comprenant :
- une structure résonnante (2) destinée à être mise en vibration pour résonner à une fréquence de résonnance qui varie en fonction de la température de la structure résonnante ;
- au moins un émetteur d'ondes acoustiques (3a, 3b) monté sur la structure résonnante (2) et apte à lui transmettre des ondes acoustiques pour la faire vibrer à ladite fréquence de résonance ;
- un récepteur d'ondes acoustiques (4) monté sur la structure résonnante apte à capter des ondes acoustiques se propageant dans la structure suspendue ;
- des éléments de connectique permettant de relier l'au moins un émetteur et le récepteur à une unité électronique externe au capteur de température ;
**caractérisé en ce que** lesdits éléments de connectique comprennent une fiche (F) à quatre points de contact consistant en un premier et un deuxième points de contact (E1, E2) destinés à véhiculer un signal sonore stéréophonique, un troisième point de contact (GND) destiné à fournir une référence de masse et un quatrième point de contact (Micro) destiné à véhiculer un signal d'un microphone, lesdits éléments de connectique étant configurés pour relier l'au moins un émetteur (3a, 3b) au premier et au deuxième point de contact (E1, E2) et pour relier le récepteur au quatrième point de contact (Micro).

2. Capteur de température selon la revendication 1, comprenant un émetteur doté de deux électrodes et dans lequel lesdits éléments de connectique sont configurés pour relier les électrodes de l'émetteur au premier et au deuxième point de contact, respectivement.

3. Capteur de température selon la revendication 1, comprenant deux émetteurs chacun doté de deux électrodes agencés en vis-à-vis de part et d'autre de la structure résonnante et dans lequel lesdits éléments de connectique sont configurés pour relier l'une des électrodes d'un émetteur au premier point de contact et l'une des électrodes de l'autre émetteur au deuxième point de contact.

4. Capteur de température selon l'une des revendications 1 à 3, dans lequel le récepteur est doté de deux électrodes et dans lequel lesdits éléments de connectique sont configurés pour relier l'une des électrodes du récepteur au troisième point de contact.

5. Capteur selon l'une des revendications 1 à 4, dans lequel la structure résonnante est une plaque rectangulaire.

6. Capteur selon la revendication 1 à 5, dans lequel l'au moins un émetteur et le récepteur sont montés sur la structure résonnante par collage.

7. Capteur selon la revendication 1 à 5, dans lequel l'au moins un émetteur et le récepteur sont des transducteurs piézoélectriques.

8. Capteur selon l'une des revendications 1 à 7, comprenant en outre une enceinte dans laquelle la structure résonnante est suspendue.

9. Capteur selon l'une des revendications 1 à 8, comprenant en outre une prise jack femelle.

10. Capteur selon la revendication 9, comprenant en outre un circuit de court-circuitage configuré pour court-circuiter un microphone relié au capteur de température par l'intermédiaire de la prise jack femelle lors d'une mesure de température et pour déconnecter le récepteur du quatrième point de contact en l'absence de mesure de température.

11. Casque-micro comprenant un capteur intégré selon l'une des revendications 1 à 10.

12. Procédé de mesure de température au moyen du capteur de température selon l'une quelconque des revendications 1 à 10, comprenant les étapes consistant à :
- fournir des signaux d'émission d'ondes acoustiques sur le premier et le deuxième point de contact ;
- recueillir un signal de réception d'ondes acoustiques sur le quatrième point de contact ;
- traiter le signal de réception d'ondes acoustiques pour déterminer une température de la structure résonnante.

13. Procédé selon la revendication 12, dans lequel les signaux d'émission d'ondes acoustiques fournis sur le premier et le deuxième point de contact sont en opposition de phase.

14. Produit programme d'ordinateur comprenant des instructions de code pour l'exécution des étapes du procédé selon l'une des revendications 12 et 13 lorsque ledit programme est exécuté sur un ordinateur.

15. Unité électronique comprenant une prise à quatre points de contact consistant en un premier et un deuxième points de contact destinés à véhiculer un signal sonore stéréophonique, un troisième point de contact destinée à fournir une référence de masse et un quatrième point de contact destinée à véhiculer un signal d'un microphone, **caractérisée en ce qu'**elle est configurée, lorsque la prise de l'unité électronique et la fiche à quatre points de contact du capteur de température selon l'une des revendications 1 à 10 sont connectées l'une à l'autre, pour fournir des signaux d'émission d'ondes acoustiques sur le premier et le deuxième point de contact de la prise, recueillir un signal de réception d'ondes acoustiques sur le quatrième point de contact de la prise et traiter le signal de réception d'ondes acoustiques pour déterminer une température.

## Patentansprüche

1. Temperatursensor (1a, 1b), enthaltend:
- eine Resonanzstruktur (2), die dazu bestimmt ist, in Schwingung versetzt zu werden, um mit einer Resonanzfrequenz zu schwingen, die in Abhängigkeit von der Temperatur der Resonanzstruktur variiert;
- zumindest einen Schallwellensender (3a, 3b), der an der Resonanzstruktur (2) angebracht und dazu geeignet ist, dieser Schallwellen zu übertragen, um sie zum Schwingen mit der Resonanzfrequenz zu bringen;
- einen Schallwellenempfänger (4), der an der Resonanzstruktur angebracht und dazu geeignet ist, Schallwellen zu empfangen, die sich in der hängenden Struktur ausbreiten;
- Anschlusselemente, über welche der zumindest eine Sender und der Empfänger mit einer elektronischen Einheit verbunden werden können, die außerhalb des Temperatursensors vorgesehen ist;
**dadurch gekennzeichnet, dass** die Anschlusselemente einen Stecker (F) mit vier Kontaktpunkten enthalten, die aus einem ersten und einem zweiten Kontaktpunkt (E1, E2), die zum Weiterleiten eines stereophonen Tonsignals bestimmt sind, einem dritten Kontaktpunkt (GND), der zum Bereitstellen einer Massereferenz bestimmt ist, und aus einem vierten Kontaktpunkt (Micro) bestehen, der zum Weiterleiten eines Signals eines Mikrophons bestimmt ist, wobei die Anschlusselemente dazu ausgelegt sind, den zumindest einen Sender (3a, 3b) mit dem ersten und dem zweiten Kontaktpunkt (E1, E2) zu verbinden und um den Empfänger mit dem vierten Kontaktpunkt (Micro) zu verbinden.

2. Temperatursensor nach Anspruch 1, enthaltend einen mit zwei Elektroden versehenen Sender, wobei die Anschlusselemente dazu ausgelegt sind, die Elektroden des Senders mit dem ersten bzw. dem zweiten Kontaktpunkt zu verbinden.

3. Temperatursensor nach Anspruch 1, enthaltend zwei Sender, die jeweils mit zwei Elektroden versehen sind und beiderseits der Resonanzstruktur einander gegenüberliegend angeordnet sind, wobei die Anschlusselemente dazu ausgelegt sind, eine der Elektroden eines Senders mit dem ersten Kontaktpunkt und eine der Elektroden des anderen Senders mit dem zweiten Kontaktpunkt zu verbinden.

4. Temperatursensor nach einem der Ansprüche 1 bis 3, wobei der Empfänger mit zwei Elektroden versehen ist, wobei die Anschlusselemente dazu ausgelegt sind, eine der Elektroden des Empfängers mit dem dritten Kontaktpunkt zu verbinden.

5. Sensor nach einem der Ansprüche 1 bis 4, wobei die Resonanzstruktur eine rechteckförmige Platte ist.

6. Sensor nach Anspruch 1 bis 5, wobei der zumindest eine Sender und der Empfänger durch Verkleben an die Resonanzstruktur angebracht sind.

7. Sensor nach Anspruch 1 bis 5, wobei der zumindest eine Sender und der Empfänger piezoelektrische Wandler sind.

8. Sensor nach einem der Ansprüche 1 bis 7, ferner enthaltend ein Gehäuse, in dem die Resonanzstruktur aufgehängt ist.

9. Sensor nach einem der Ansprüche 1 bis 8, ferner enthaltend eine Klinkensteckbuchse.

10. Sensor nach Anspruch 9, ferner enthaltend eine Kurzschlussschaltung, die dazu ausgelegt ist, bei einer Temperaturmessung ein über die Klinkensteckbuchse mit dem Temperatursensor verbundenes Mikrophon kurzzuschließen und bei ausbleibender Temperaturmessung den Empfänger vom vierten Kontaktpunkt abzuschalten.

11. Headset mit einem integrierten Sensor nach einem der Ansprüche 1 bis 10.

12. Verfahren zur Temperaturmessung mittels eines Temperatursensors nach einem der Ansprüche 1 bis 10, umfassend die nachfolgenden Schritte:
- Bereitstellen von Schallwellensendesignalen am ersten und zweiten Kontaktpunkt;
- Empfangen eines Schallwellenempfangssignals am vierten Kontaktpunkt;
- Verarbeiten des Schallwellenempfangssignals zum Ermitteln einer Temperatur der Resonanzstruktur.

13. Verfahren nach Anspruch 12, wobei die am ersten und am zweiten Kontaktpunkt bereitgestellten Schallwellensendesignale gegenphasig sind.

14. Computerprogrammprodukt mit Codeanweisungen zum Durchführen der Schritte des Verfahrens nach einem der Ansprüche 12 und 13, wenn das Programm auf einem Computer ausgeführt wird.

15. Elektronische Einheit mit einer Steckbuchse mit vier Kontaktpunkten, die aus einem ersten und einem zweiten Kontaktpunkt, die zum Weiterleiten eines stereophonen Tonsignals bestimmt sind, einem dritten Kontaktpunkt, der zum Bereitstellen einer Massereferenz bestimmt ist, und aus einem vierten Kontaktpunkt bestehen, der zum Weiterleiten eines Signals eines Mikrophons bestimmt ist,
**dadurch gekennzeichnet, dass** sie dazu ausgelegt ist, dann, wenn die Steckbuchse der elektronischen Einheit und der Stecker mit vier Kontaktpunkten des Temperatursensors nach einem der Ansprüche 1 bis 10 miteinander verbunden sind, Schallwellensendesignalen am ersten und zweiten Kontaktpunkt der Steckbuchse bereitzustellen, ein Schallwellenempfangssignal am vierten Kontaktpunkt der Steckbuchse zu empfangen und das Schallwellenempfangssignal zu verarbeiten, um eine Temperatur zu ermitteln.

## Claims

1. Temperature sensor (1a, 1b) including:
- a resonant structure (2) that is to be vibrated to resonate at a resonant frequency that varies as a function of the temperature of the resonant structure;
- at least one sound waves transmitter (3a, 3b) mounted on the resonant structure (2) and capable of transmitting sound waves to it to make it vibrate at said resonant frequency;
- a sound waves receiver (4) mounted on the resonant structure and capable of capturing sound waves propagating within the resonant structure;
- connection elements making it possible to connect the at least one transmitter and the receiver to an electronic unit external to the temperature sensor;
**characterized in that** said connection elements include a connector (F) with four contact points consisting in a first and a second contact point (E1, E2) for conveying a stereophonic sound signal, a third contact point (GND) for providing a reference ground, and a fourth contact point (Micro) for conveying a microphone signal, said connection elements being configured so as to connect the at least one transmitter (3a, 3b) to the first and second contact points (E1, E2) and to connect the receiver to the fourth contact point (Micro).

2. Temperature sensor according to claim 1, comprising a transmitter with two electrodes and in which said connection elements are configured to connect elements of the transmitter to the first and second contact points respectively.

3. Temperature sensor according to claim 1, comprising two transmitters, each provided with two electrodes located on each side of the resonant structure and in which said connection elements are configured to connect one of the electrodes of one transmitter to the first contact point and one of the electrodes of the other transmitter to the second contact point.

4. Temperature sensor according to one of claims 1 to 3, in which the receiver is provided with two electrodes and in which said connection elements are configured to connect one of the electrodes of the receiver to the third contact point.

5. Sensor according to one of claims 1 to 4, in which the resonant structure is a rectangular plate.

6. Sensor according to one of claims 1 to 5, in which the at least one transmitter and the receiver are installed on the resonant structure by gluing.

7. Sensor according to one of claims 1 to 5, in which the at least one transmitter and the receiver are piezoelectric transducers.

8. Sensor according to one of claims 1 to 7, also comprising a chamber in which the resonant structure is suspended.

9. Sensor according to one of claims 1 to 8, also comprising a jack socket.

10. Sensor according to claim 9, also comprising a short circuiting circuit configured to short circuit a microphone connected to the temperature sensor by means of the jack socket during a temperature measurement and to disconnect the receiver from the fourth contact point when no temperature measurement is being made.

11. Microphone headset comprising a built in sensor according to one of claims 1 to 10.

12. Temperature measurement method using the temperature sensor according to any one of claims 1 to 10, including steps consisting of:
- output sound wave transmission signals on the first and second contact points;
- collect a sound waves reception signal on the fourth contact point;
- process the sound waves reception signal to determine a temperature of the resonant structure.

13. Method according to claim 12, in which the sound wave transmission signals supplied on the first and second contact points are in phase opposition.

14. Computer program including code instructions for the execution of the steps of the method according to one of claims 12 and 13 when said program is executed on a computer.

15. Electronic unit including a connector with four contact points consisting of a first and a second contact point that are to convey a stereophonic sound signal, a third contact point that is to provide a reference ground and a fourth contact point that is to convey a microphone signal,
**characterised in that** when the electronic unit connector and the temperature sensor plug with four contact points according to any one of claims 1 to 10 are connected to each other, it is configured to output sound wave transmission signals on the first and second contact points of the connector, to collect a sound waves reception signal on the fourth contact point of the connector and to process the sound waves reception signal to determine a temperature.
